**Europäisches Patentamt**

**European Patent Office**

**Office européen des brevets**

(19)

(11) Veröffentlichungsnummer : **0 359 065 B1**

(12)                    # EUROPÄISCHE PATENTSCHRIFT

(45) Veröffentlichungstag der Patentschrift :
**27.12.91 Patentblatt 91/52**

(51) Int. Cl.⁵ : **B60J 5/04, B61D 19/02, B61D 19/00**

(21) Anmeldenummer : **89116191.1**

(22) Anmeldetag : **01.09.89**

(54) **Schwingtür für Fahrzeuge.**

(30) Priorität : **14.09.88 CH 3433/88**

(43) Veröffentlichungstag der Anmeldung :
**21.03.90 Patentblatt 90/12**

(45) Bekanntmachung des Hinweises auf die
Patenterteilung :
**27.12.91 Patentblatt 91/52**

(84) Benannte Vertragsstaaten :
**AT BE CH DE ES FR IT LI**

(56) Entgegenhaltungen :
**EP-A- 0 196 488**
**ZEV - GLASERS ANNALEN, Band 112, Nr. 1,**
**Januar 1988, Seiten 33-35, Georg Siemens**
**Verlagsbuchhandlung, Berlin, DE; P. FABEL et**
**al.: "Druckertüchtigte Übergangstüren, Fen-**
**ster und Wagenkästen für Reisezugwagen**
**des Hochgeschwindigkeitsverkehrs"**

(73) Patentinhaber : **INVENTIO AG**
**Seestrasse 55**
**CH-6052 Hergiswil NW (CH)**

(72) Erfinder : **Katz, Eduard**
**Rankgasse 7**
**CH-4425 Titterten (CH)**

EP 0 359 065 B1

## Beschreibung

Die Erfindung betrifft eine Schwingtür für Fahrzeuge, insbesondere für Schienenfahrzeuge, bestehend aus einem Türrahmen, einem Türflügel, einer zwischen dem Türrahmen und dem Türflügel angeordneten Dichtung sowie aus Schwing- und Führungsarmen für die Schwingbewegung des Türflügels.

Aus der Offenlegungsschrift EP-A-047619 ist eine Schwingtür bekannt, bei der der Türflügel von einem oberen und einem unteren Schwingarm bewegt wird. Die Schwingarme sind einenends an den Türflügel und anderenends an eine angetriebene Drehkurbel angelenkt. An der beim Öffnungsvorgang vertikalen, führenden Kante des Türflügels ist eine im Querschnitt gabelförmige Dichtung mit einer äusseren und einer inneren, verkürzten Zinke angeordnet. Die beim Öffnungsvorgang vertikale, folgende Kante des Türflügels weist eine im Querschnitt halbrunde Dichtung auf. Der Türrahmen ist entlang der führenden Kante entsprechend dem gabelförmigen Querschnitt der Dichtung abgeschrägt. Ein Führungsarm bewegt den Türflügel beim Öffnungsvorgang anfänglich so aus dem Türrahmen, dass die führende Kante mit der gabelförmigen Dichtung entlang des abgeschrägten Türrahmens gleitet. Beim Schliessvorgang wird der Türflügel mit einer Schwingbewegung so weit in den Türrahmen hineingeführt, bis der Türflügel bündig mit dem Türrahmen liegt. Dabei werden die Dichtungen der vertikalen Kanten gegen den Türrahmen gepresst.

Der Nachteil dieser bekannten Einrichtung liegt darin, dass die Schwingtür den heutigen Anforderungen hinsichtlich Türflügelfixierung und Türflügeldichtung in der Schliesslage nicht mehr gerecht wird.

Hier will die Erfindung Abhilfe schaffen. Die Erfindung, wie sie in den Ansprüchen gekennzeichnet ist, löst die Aufgabe, eine Schwingtür zu schaffen, bei der in der Schliesslage die Türflügelfixierung in funktioneller Wechselwirkung mit der Türflügeldichtung steht und unabhängig von den Schwing- und Führungsarmen erfolgt.

Die durch die Erfindung erreichten Vorteile sind im wesentlichen darin zu sehen, dass der Türflügel durch selbst bei Hochgeschwindigkeitszügen auftretende Über-/Unterdruckstösse weder in das Wageninnere gedrückt wird noch aus der Karosserie austreten kann und dass bei der Bemessung von Türrahmen, Türflügel, Schwing- und Führungsarmen grössere Toleranzen zulässig sind.

Im folgenden wird die Erfindung anhand von lediglich einen Ausführungsweg darstellenden Zeichnungen näher erläutert. Es zeigen :

Fig. 1    einen Grundriss einer erfindungsgemässen Schwingtür in der Schliesslage und in der Öffnungslage,
Fig. 2    eine Querschnittsansicht der Schwingtür in der Schliesslage,
Fig. 3    Einzelheiten der Schwingtür gemäss Fig. 1 beim Schliessvorgang,
Fig. 4    Einzelheiten der Schwingtür gemäss Fig. 1 in der Schliesslage,
Fig. 5    Einzelheiten einer selbsttätigen Verriegelungseinrichtung gemäss Fig. 3 und 4 und
Fig. 6    einen Aufriss der selbsttätigen Verriegelungseinrichtung gemäss Fig. 5.

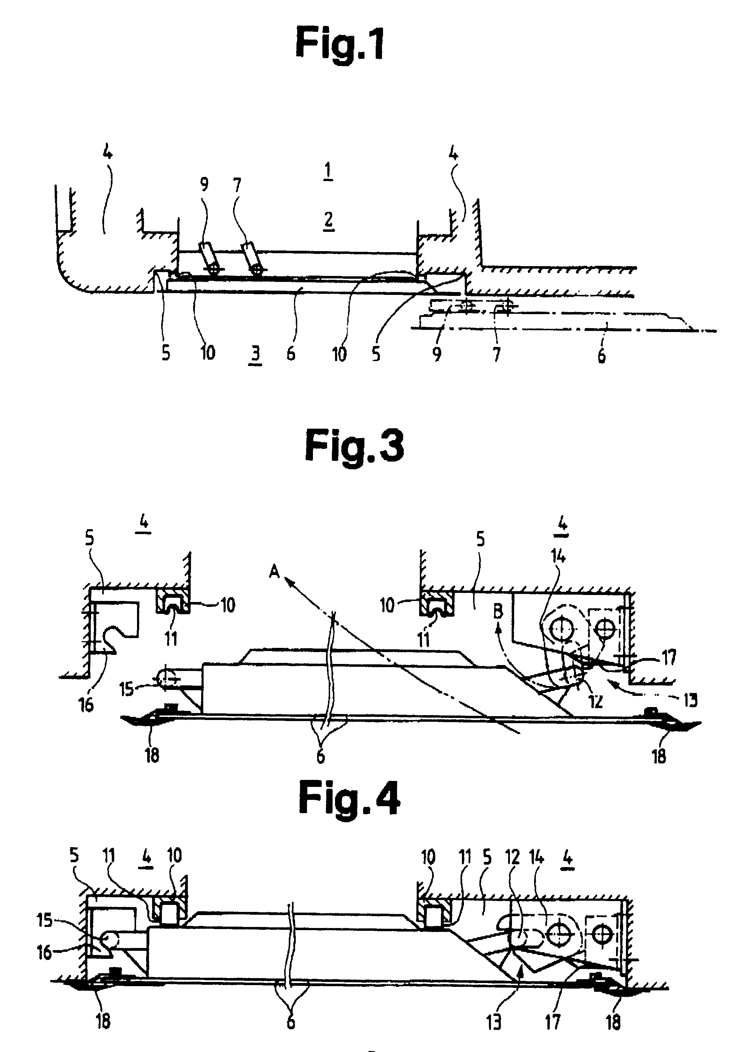

In den Fig. 1 bis 6 ist mit 1 ein über Stufen 2 und durch eine Schwingtür 3 erreichbares Passagierdeck bezeichnet. Ein in eine Fahrzeugkarosserie 4 eingelassener Türrahmen 5, ein Türflügel 6, ein am Türflügel 6 angelenkter oberer Schwingarm 7, ein am Türflügel 6 angelenkter unterer Schwingarm 8 und ein am Türflügel 6 angelenkter Führungsarm 9 bilden die Schwingtür 3. Ein im Querschnitt U-förmiges Profil 10 ist an den horizontalen und vertikalen Seiten des Türrahmens 5 angeordnet. Das U-förmige Profil 10 weist im Innern eine druckmittelbetriebene Innendichtung 11 auf, die im drucklosen Zustand bündig mit der Profilvorderkante liegt und im beaufschlagten Zustand aus dem U-förmigen Profil 10 tritt.

Beim in der Fig. 3 dargestellten Schliessvorgang bewegt sich der Türflügel 6 entlang einer mit dem Pfeil A bezeichneten Schwinglinie. Dabei greifen an der vertikalen rechten Türflügelinnenkante angeordnete rechte Halterungen 12 in mit 13 bezeichnete, am Türrahmen 5 angeordnete, selbsttätige Verriegelungseinrichtungen ein. Im weiteren Verlauf des Schliessvorgangs wird ein gabelförmiger Drehriegel 14 der Verriegelungseinrichtung 13 durch die Halterung 12 in eine mit dem Pfeil B symbolisierte Drehbewegung versetzt. Kurz vor dem Erreichen der Schliesslage gelangen an der vertikalen linken Türflügelinnenkante angeordnete linke Halterungen 15 in am Türrahmen 5 angeordnete Fangklauen 16. Sobald der Türflügel 6 die Schliesslage gemäss Fig. 4 erreicht hat, verriegelt eine Sperrklinke 17 den Drehriegel 14. Anschliessend wird die Innendichtung 11 mit Druck beaufschlagt. Die durch die Innendichtung 11 ausgelöste Kraft wirkt derart auf den Türflügel 6 ein, dass die rechten Halterungen 12 gegen die Drehriegel 14 und die linken Halterungen 15 gegen die Fangklauen 16 gepresst werden und dabei einen festen Sitz bilden. Eine an den horizontalen und vertikalen Kanten des Türflügels 6 angebrachte Aussendichtung 18 schliesst den Türrahmen während der Türflügelschliesslage gegen aussen ab.

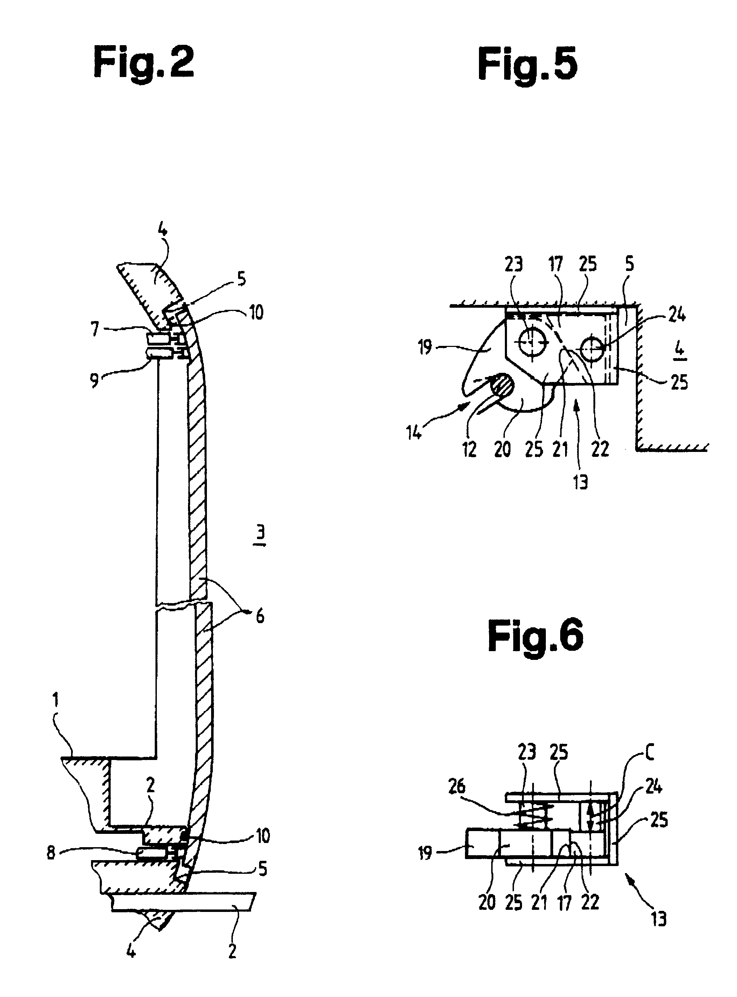

Gemäss den Fig. 5 und 6 besteht die in den Fig. 3 und 4 dargestellte, selbsttätige Verriegelungseinrichtung 13 aus dem bereits genannten gabelförmigen Drehriegel 14 mit einer langen Zinke 19 und einer kurzen Zinke 20 und einer Steuerkante 21 sowie aus der bereits genannten Sperrklinke 17 mit einer Steuerkante 22. Der

2

Drehriegel 14 ist an einer ersten Achse 23 drehbar, die Sperrklinke 17 mittels einer zweiten Achse 24 axial verschiebbar gelagert. Beide Achsen 23 ; 24 werden von einer im Querschnitt U-förmigen Konsole 25 gehalten. Eine um die erste Achse 23 angeordnete Torsionsfeder 26 ist einenends an der Konsole 25 und anderenends am Drehriegel 14 befestigt. Ein Pfeil C symbolisiert die Verschiebebewegung der Sperrklinke 17. In den Fig. 3 und 4 ist eine Sperrklinke 17 dargestellt, bei der die Steuerkante 22 durch eine Seite einer vorstehenden Nase gebildet wird. In der Fig. 5 wird die Steuerkante 22 in einer weiteren Ausführungsform durch die Langseite der trapezförmigen Sperrklinke 17 gebildet.

In der Öffnungslage des Türflügels 6 wird der gabelförmige Drehriegel 14 von der Torsionsfeder 26 in der in der Fig. 3 gezeigten Lage gehalten. Die Sperrklinke 17 befindet sich dabei oberhalb des Drehriegels 14 in der Entriegelungslage. Beim Schliessvorgang greift die rechte Halterung 12 an der langen Zinke 19 des Drehriegels 14 an und versetzt diesen entgegen der Torsionsfederkraft in die Drehbewegung B. In der Schliesslage des Türflügels 6 liegt die Steuerkante 21 des Drehriegels 14 parallel zu der Steuerkante 22 der Sperrklinke 17, so dass diese durch die Schwerkraft in die in der Fig. 6 dargestellte Verriegelungslage gebracht wird. Die von der druckmittelbetriebenen Innendichtung 11 ausgelöste Kraft wird von der Halterung 12 auf die kurze Zinke 20, von dieser über die Steuerkanten 21 ; 22 auf die Sperrklinke 17 und den Türrahmen 5 übertragen. Dadurch wird einerseits das Spiel zwischen der Halterung 12 und dem Drehriegel 14 und andererseits das Spiel zwischen dem Drehriegel 14 und der Sperrklinke 17 aufgehoben. Vor einem erneuten Öffnen der Schwingtür 3 wird die Innendichtung 11 in den drucklosen Zustand versetzt und daran anschliessend die Sperrklinke 17 manuell oder automatisch, beispielsweise elektromagnetisch, in die Entriegelungslage gehoben.

Die selbsttätige Verriegelungseinrichtung 13 wird den Sicherheitsbestimmungen, dass Türen auch bei Energieausfall verriegelt bleiben müssen, in vollem Umfang gerecht. Die Sperrklinke 17 fällt bar jeglicher Fremdenergie, nur unter Einwirkung der Schwerkraft in die Verriegelungslage und verharrt in dieser ohne Fremdeinwirkung.

## Patentansprüche

1. Schwingtür für Fahrzeuge, insbesondere für Schienenfahrzeuge, bestehend aus einem Türrahmen (5), einem Türflügel (6), einer zwischen dem Türrahmen (5) und dem Türflügel (6) angeordneten Dichtung sowie aus Schwing- und Führungsarmen (7 ; 8 ; 9) für die Schwingbewegung des Türflügels (6), **dadurch gekennzeichnet,**
— dass die Schwingtür (3) zum Festhalten des Türflügels (6) in der Schliesslage Halterungen (12 ; 15), und am Türrahmen (5) Fangklauen (16) und selbsttätige Verriegelungseinrichtungen (13) aufweist, wobei beim Schliessvorgang die Halterungen (12 ; 15) in die Fangklauen (16) und Verriegelungseinrichtungen (13) eingreifen,
— dass die Schwingtür (3) zum Abdichten eines Passagierdecks (1) und zur Aufhebung des Spiels zwischen den Halterungen (12 ; 15) und den Fangklauen (16) sowie zur Aufhebung des Spiels zwischen den Halterungen (12 ; 15) und den Verriegelungseinrichtungen (13) eine durch Druckmittel an den Türflügel (6) andrückbare Innendichtung (11) aufweist und
— dass der Türflügel (6) eine mit dem Türrahmen (5) zusammenwirkende Aussendichtung (18) aufweist.

2. Schwingtür nach Anspruch 1, **dadurch gekennzeichnet,**
— dass die Halterungen (12 ; 15) an den vertikalen Innenkanten des Türflügels (6) angeordnet sind und
— dass die Fangklauen (16) und die Verriegelungseinrichtungen (13) an den vertikalen Seiten des Türrahmens (5) angeordnet sind.

3. Schwingtür nach Anspruch 1, **dadurch gekennzeichnet,** dass die druckmittelbetriebene Dichtung (11) in einem U-förmige, sich über die horizontalen und vertikalen Seiten dem Türrahmens (5) erstreckenden Profil (10) angeordnet ist.

4. Schwingtür nach Anspruch 1, **dadurch gekennzeichnet,** dass die Aussendichtung (18) an den horizontalen und vertikalen Kanten des Türflügels (6) angeordnet ist.

5. Schwingtür nach Anspruch 1, **dadurch gekennzeichnet,** dass die selbsttätige Verriegelungseinrichtung (13) einen von der Halterung (12) betätigten, an einer ersten Achse (23) drehbar gelagerten gabelförmigen Drehriegel (14) aufweist.

6. Schwingtür nach Anspruch 1, **dadurch gekennzeichnet,** dass die selbsttätige Verriegelungseinrichtung (13) eine mittels einer zweiten Achse (24) axial verschiebbare Sperrklinke (17) aufweist, die durch die Schwerkraft von einer Entriegelungslage in eine Verriegelungslage gebracht wird.

7. Schwingtür nach Anspruch 1, **dadurch gekennzeichnet,** dass die selbsttätige Verriegelungseinrichtung (13) eine die beiden Achsen (23 ; 24) tragende, im Querschnitt U-förmige Konsole (25) aufweist.

8. Schwingtür nach Anspruch 1, **dadurch gekennzeichnet,** dass die selbsttätige Verriegelungseinrichtung (13) eine um die erste Achse (23) angeordnete, den gabelförmigen Drehriegel (14) in der Öffnungslage haltende Torsionsfeder (26) aufweist, die einenends an der Konsole (25) und anderenends an dem gabelförmigen Drehriegel (14) befestigt ist.

9. Schwingtür nach Anspruch 5, **dadurch gekennzeichnet,**

— dass der gabelförmige Drehriegel (14) eine lange Zinke (19) aufweist, auf die die Halterung (12) beim Schliessvorgang einwirkt und

— dass der gabelförmige Drehriegel (14) eine kurze Zinke (20) aufweist, auf die die Halterung (12) in der Schliesslage einwirkt.

10. Schwingtür nach Anspruch 5, **dadurch gekennzeichnet,** dass der gabelförmige Drehriegel (14) eine Steuerkante (21) aufweist, an der die von der druckmittelbetriebenen Innendichtung (11) ausgelöste Kraft auf die Sperrklinke (17) übertragen wird.

11. Schwingtür nach Anspruch 6, **dadurch gekennzeichnet,** dass die Sperrklinke (17) eine Steuerkante (22) aufweist, die in der Verriegelungslage parallel zu der Steuerkante (21) des gabelförmigen Drehriegels (14) liegt und dabei den gabelförmigen Drehriegel (14) verriegelt.

12. Schwingtür nach Anspruch 6, **dadurch gekennzeichnet,** dass die selbsttätige Verriegelungseinrichtung (13) eine rechteckförmige mit einer Nase versehene Sperrklinke (17) aufweist, an der die Steuerkante (22) an einer Nasenseite angeordnet ist.

13. Schwingtür nach Anspruch 6, **dadurch gekennzeichnet,** dass die selbsttätige Verriegelungseinrichtung (13) eine trapezförmige Sperrklinke (17) aufweist, an der die Steuerkante (22) an der Trapezlangseite angeordnet ist.

## Claims

1. Swing door for vehicles, in particular for rail vehicles, consisting of a door frame (5), a door wing (6), a seal arranged between the door frame (5) and the door wing (6) as well as of swing and guide arms (7 ; 8 ; 9) for the swinging movement of the door wing (6), characterised thereby,

— that the swing door (3) displays retaining devices (12 ; 15) and — at the door frame (5) — arresting claws (16) and automatic latching equipments (13) for the retention of the door wing (6) in the closed stting, wherein the retaining devices (12 ; 15) engage into the arresting claws (16) and the latching equipments (13) during the closing operation,

— that the swing door (3) displays an inner seal (11) urgeable by pressure medium against the door wing (6) for the sealing of a passenger deck (1) and for cancellation of the play between the retaining devices (12 ; 15) and the arresting claws (16) as well as for cancellation of the play between the retaining devices (12 ; 15) and the latching equipments (13) and

— that the door wing (6) displays an outer seal (18) co-operating with the door frame (5).

2. Swing door according to claim 1, characterised thereby,

— that the retaining devices (12 ; 15) are arranged at the vertical inward edges of the door wing (6) and

— that the arresting claws (16) and the latching equipments (13) are arranged at the vertical sides of the door frame (5).

3. Swing door according to claim 1, characterised thereby, that the seal (11) operated by pressure medium is arranged in a U-shaped profile (10) extending over the horizontal and vertical sides of the door frame (5).

4. Swing doors according to claim 1, characterised thereby, that the outer seal (18) is arranged at the horizontal and vertical edges of the door wing (6).

5. Swing door according to claim 1, characterised thereby, that the automatic latching equipment (13) displays a fork-shaped hasp (14), which is borne to be rotatable at a first axle (23) and actuated by the retaining device (12).

6. Swing door according to claim 1, characterised thereby, that the automatic latching equipment (13) displays a blocking pawl (17), which is displaceable axially by means of a second axle (24) and which is brought by gravity from an unlatching position into a latching position.

7. Swing door according to claim 1, characterised thereby, that the automatic latching equipment (13) displays a bracket (25), which is U-shaped in cross-section and carries both the axles (23 ; 24).

8. Swing door according to claim 1, characterised thereby, that the automatic latching equipment (13) displays a torsion spring (26), which is arranged around the first axle (23), holds the fork-shaped hasp (14) in the opening position and is fastened by one end to the bracket (25) and by the other end to the fork-shaped hasp (14).

9. Swing door according to claim 5, characterised thereby

— that the fork-shaped hasp (14) displays a long tine (19), on which the retaining device (12) acts during the closing operation and

— that the fork-shaped hasp (14) displays a short tine (20), on which the retaining device (12) acts in the closed position.

10. Swing door according to claim 5, characterised thereby, that the fork-shaped hasp (14) displays a control edge (21), at which the force, which is initiated by the inner seal (11) operated by pressure medium, is transmitted to the blocking pawl (17).

11. Swing door according to claim 6, characterised thereby, that the blocking pawl (17) displays a control edge (22), which in the latching position lies parallelly to the control edge (21) of the fork-shaped hasp (14) and in that case latches the fork-shaped hasp (14).

12. Swing door according to claim 6, characterised thereby, that the automatic latching equipment (13) displays a rectangular blocking pawl (17), which is provided with a lug and at which the control edge (22) is arranged at one side of the lug.

13. Swing door according to claim 6, characterised thereby, that the automatic latching equipment (13) displays a trapezoidal blocking pawl (17), at which the control edge (22) is arranged at the long side of the trapezium.

## Revendications

1. Porte pivotante pour véhicules, notamment pour véhicules sur rails, constitué par un cadre de porte (5), un battant de porte (6), un élément d'étanchéité disposé entre le cadre de porte (5) et le battant de porte (6), et de bras pivotants et de bras de guidage (7 ; 8 ; 9) permettant le mouvement de pivotement du battant de porte (6) ; caractérisée en ce

— que la porte pivotante (3) comporte, pour le maintien de son battant (6) dans la position de fermeture, des dispositifs de retenue (12 ; 15), et, sur son cadre (5), des mâchoires de saisie (16) et des dispositifs automatiques de verrouillage (13), auquel cas, lors de l'opération de fermeture, les dispositifs de retenue (12 ; 15) s'engagent dans les mâchoires de saisie (16) et dans les dispositifs de verrouillage (13),

— que la porte pivotante (3) comporte, pour la fermeture étanche d'un plancher (1) de support des passagers et, pour l'élimination du jeu entre les dispositifs de retenue (12 ; 15) et les mâchoires de saisie (16) ainsi que pour la suppression du jeu entre les dispositifs de retenue (12 ; 15) et les dispositifs de verrouillage (13), un élément d'étanchéité intérieur (11), qui peut être repoussé par un fluide sous pression contre le battant de porte (6), et

— que le battant de porte (6) possède un élément d'étanchéité extérieur (18) coopérant avec le cadre de porte (5).

2. Porte pivotante selon la revendication 1, caractérisée en ce

— que les dispositifs de retenue (12 ; 15) sont installés sur des bordes intérieurs verticaux du battant de porte (6), et

— que les mâchoires de saisie (16) et les dispositifs de verrouillage (13) sont disposés sur les côtés verticaux du cadre de porte (5).

3. Porte pivotante selon la revendication 1, caractérisée en ce que l'élément d'étanchéité (11) actionné par un fluide sous pression est disposé dans un profilé en forme de U (10) qui s'étend sur les côtés horizontaux et verticaux du cadre de porte (5).

4. Porte pivotante selon la revendication 1, caractérisée en ce que l'élément d'étanchéité extérieur (18) est disposé sur les bords horizontaux et verticaux du battant de porte (6).

5. Porte pivotante selon la revendication 1, caractérisée en ce que le dispositif automatique de verrouillage (13) comporte un verrou tourniquet (14) en forme de fourche, actionné par le dispositif de retenue (12) de manière à pouvoir tourner autour d'un premier axe (23).

6. Porte pivotante selon la revendication 1, caractérisée en ce que le dispositif automatique de verrouillage (13) possède un cliquet de blocage (17), qui est déplaçable axialement au moyen d'un second axe (24) et peut être amené, sous l'action de la force de pesanteur, d'une position déverrouillée dans une position verrouillée.

7. Porte pivotante selon la revendication 1, caractérisée en ce que le dispositif automatique de verrouillage (13) possède une console (25) en forme de U en coupe transversale, qui porte les deux axes (23 ; 24).

8. Porte pivotante selon la revendication 1, caractérisée en ce que le dispositif automatique de verrouillage (13) possède un ressort de torsion (26) qui est disposé autour du premier axe (23), maintient le verrou tourniquet (14) en forme de fourche dans la position ouverte et est fixé d'une part sur la console (25) et d'autre part sur le verrou tourniquet (14) en forme de fourche.

9. Porte pivotante selon la revendication 5, caractérisée en ce

— que le verrou tourniquet en forme de fourche (14) possède une pointe longue (19), sur laquelle agit le dispositif de retenue (12) lors de l'opération de fermeture, et

— que le verrou tourniquet (14) en forme de fourche possède une pointe courte (20), sur laquelle agit le dispositif de retenue (12) dans la position fermée.

10. Porte pivotante selon la revendication 5, caractérisée en ce que le verrou tourniquet (14) en forme de fourche possède une arête de commande (21), au niveau de laquelle la force déclenchée par l'élément d'étanchéité intérieur (11), actionné par un fluide sous pression, est transmise au cliquet de blocage (17).

11. Porte pivotante selon la revendication 6, caractérisée en ce que le cliquet de blocage (17) possède une arête de commande (22) qui, dans la position verrouillée, est parallèle à l'arête de commande (21) du verrou tourniquet (14) en forme de fourche et verrouille ce verrou.

12. Porte pivotante selon la revendication 6, caractérisée en ce que le dispositif automatique de verrouillage (13) possède un cliquet de blocage rectangulaire (17) qui est pourvu d'un bec et sur lequel l'arête de commande (22) est disposée au niveau d'un côté du bec.

13. Porte pivotante selon la revendication 6, caractérisée en ce que le dispositif automatique de verrouillage (13) possède un cliquet de blocage de forme trapézoïdale (17), sur lequel l'arête de commande (22) est disposée, sur le grand côté du trapèze.

# Fig.1

# Fig.3

# Fig.4

# Fig.2

# Fig.5

# Fig.6